# EUROPÄISCHE PATENTANMELDUNG

(11) **EP 3 205 443 A1**
(43) Veröffentlichungstag der Anmeldung: **16.08.2017**
(21) Anmeldenummer: 16154842.5
(22) Anmeldetag: 09.02.2016
(51) Int. Cl.: B23P 15/14, C21D 9/32, C22C 38/44, C21D 1/10, C22C 38/02, C22C 38/04

(54) **VERFAHREN ZUM HERSTELLEN EINES ZAHNRADES, ZAHNRAD, GETRIEBEVERDICHTER**

(71) Anmelder: Siemens Aktiengesellschaft, 80333 München (DE)
(72) Erfinder: Bode, Ralf, 47441 Moers (DE)

(57) **Zusammenfassung**

Die Erfindung betrifft ein Verfahren zum Herstellen eines Zahnrades PN mit den folgenden Schritten:
a) Bereitstellen eines Rohlings (GR) aus Stahl,
b) Mechanische Vorbearbeitung mit Aufmaß,
c) Aufkohlen zumindest an Teilabschnitten (CAS) des Zahnrades (PN), wobei das gesamte Zahnrad (PN) einer Aufkohlungstemperatur (CAT) ausgesetzt wird und die aufzukohlenden Teilabschnitte (CAS) mit Kohlenstoff (C) angereichert werden,
gekennzeichnet durch die weiteren Schritte
d) Abkühlen des Zahnrades (PN) in einer Gasatmosphäre,
e) Randschichthärten der aufgekohlten Teilabschnitte (CAS),
f) Anlassen,
g) mechanische Fertigbearbeitung.

## Beschreibung

### Verfahren zum Herstellen eines Zahnrades, Zahnrad, Getriebeverdichter

Die Erfindung betrifft ein Verfahren zum Herstellen eines Zahnrades mit den folgenden Schritten:
a) Bereitstellen eines Rohlings aus Stahl,
b) Mechanische Vorbearbeitung mit Aufmaß
c) Aufkohlen zumindest an Teilabschnitten des Zahnrades, wobei das gesamte Zahnrad einer Aufkohlungstemperatur ausgesetzt wird und die aufzukohlenden Teilabschnitte mit Kohlenstoff angereichert werden.

Ein obiges Verfahren ist bereits aus der internationalen Patentanmeldung WO 2015044249 A2 bekannt.

Ein derartig hergestelltes Zahnrad ist bereits aus der DE 10 2014 207 431 A1 bekannt.

Ein Getriebeverdichter mit einem derartigen oder vergleichbaren Zahnrad ist bereits aus der WO 2015043879 A1 oder der WO 2014195390 A1 oder der WO 2012104153 A1 oder der DE 10 2010 041 211 A1 bekannt.

Getriebe, die die Antriebs- oder Nutzleistung von Turbomaschinen übertragen, weisen in der Regel ausgesprochen hohe Verzahnungsgeschwindigkeiten im Teilkreis und kleine Moduln auf. Wenn das Getriebe darüber hinaus hohe Drehzahlunterschiede realisieren soll, dann weist zumindest eine Komponente innerhalb des Getriebes, zumindest ein sogenanntes Großrad eine große Zahl von relativ kleinen Zähnen auf. Werden diese Großräder zur Verbesserung der Tragfähigkeit aufgekohlt und einsatzgehärtet, wie in der WO 2015044249 A2 beschrieben, dann sind die Dicke der Randschicht, die einen erhöhten Kohlenstoffgehalt aufweist und damit auch die sogenannte Einhärtetiefe bedingt durch den kleinen Modul relativ klein. Bei der Herstellung derartiger Großräder gibt sich nun das Problem, dass beim Abschrecken in einem flüssigen Medium, wie Öl oder Polymerlösung oder Wasser durch Verzug Maß- und Formänderungen entstehen. Es ist zwar übliche Praxis, Verzüge durch Aufmaß zu berücksichtigen und nach der Wärmebehandlung durch eine Schleifbehandlung die Sollmaße einzustellen. Bei großen Zahnrädern und kleinen Moduln überschreiten die Verzüge aber oft die Einhärtetiefe, so dass beim anschließenden Schleifen die aufgekohlte Schicht wieder abgetragen wird, so dass die gewünschten Materialeigenschaften sich nicht mit der Sollgeometrie vereinbaren lassen.

Alternativ werden sogenannte Großräder (Durchmesser >1m) häufig nicht einsatzgehärtet, sondern aus Vergütungsstählen, die aber deutlich geringere Tragfähigkeiten aufweisen, hergestellt und komplett durchvergütet. In der Praxis führt das zu deutlich größeren Zahnbreiten, als bei der Verwendung von Einsatzstählen erforderlich wären. Der höhere Materialbedarf ist mit größeren Kosten verbunden, die Getriebe werden raumgreifender und es entstehen höhere mechanische Verluste bzw. diese Lösung führt zu einem niedrigeren Wirkungsgrad des Getriebes.

Die Erfindung hat es daher zur Aufgabe gemacht, ein Verfahren zur Herstellung eines Zahnrades, ein Zahnrad bzw. ein Getriebe zu schaffen, das die oben erläuterten Nachteile des Standes der Technik vermeidet.

Zur Lösung wird ein Verfahren der eingangs definierten Art vorgeschlagen, das gekennzeichnet ist durch die weiteren Verfahrensschritte:
d) Abkühlen des Zahnrades in einer Gasatmosphäre,
e) Randschichthärten der aufgekohlten Teilabschnitte,
f) Anlassen,
g) mechanische Fertigbearbeitung.

Die Aufkohlungstemperatur beträgt bevorzugt zwischen 850°C bis 930°C.

Der entscheidende Vorteil der erfindungsgemäßen Lösung ist verursacht durch das langsamere Abkühlen des Zahnrades in einer Gasatmosphäre bzw. dem Abkühlen mittels der Umgebungsluft. Hierzu wird das Zahnrad bevorzugt einfach an der Luft abgelegt. Dadurch entsteht ein langsameres Abkühlen nach dem Aufkohlen im Unterschied zu der üblicherweise angewandten Flüssigkeitsabschreckung. Aufgrund des langsameren Abkühlvorgangs kommt es nicht zu den großen Verzügen und Maßabweichungen, die eine mechanische Nachbearbeitung des Zahnrades in so großem Ausmaß erfordern, dass die einsatzgehärteten Randzonen als Aufmaß für die Nachbearbeitung nicht ausreichend sind. Die Erfindung hat erkannt, dass die Verzugsprobleme in einem kaum beherrschbaren Ausmaß entstehen, wenn die großen Zahnräder aus der Austenitisierungstemperatur in Flüssigkeit, das heißt in Öl, einer Polymerlösung oder in Wasser abgeschreckt werden.

Die Austenitisierungstemperatur beträgt bevorzugt zwischen 750°C bis 850°C.

Eine vorteilhafte Weiterbildung der Erfindung sieht vor, dass der Stahl des Rohlings ein sogenannter Lufthärter ist. Der Wechsel des Zahnradwerkstoffs in Verbindung mit dem neuen Verfahren führt dazu, dass das Abkühlen an der Umgebungsluft dem Grundwerkstoff des Rohlings bzw. des Zahnrades besonders vorteilhafte Härteeigenschaften verleiht, die erreicht werden können durch ein Abkühlen an Luft ohne die Verzüge durch ein Abschrecken in Flüssigkeit in Kauf nehmen zu müssen. Die darüber hinausgehenden Härteeigenschaften an dem Zahnrad werden insbesondere im Bereich der Verzahnung gefordert. Diese Härteeigenschaften werden in diesen aufgekohlten Bereichen durch eine nachfolgende lokale Vergütung erreicht. Dieses Randschichthärten der aufgekohlten Teilabschnitte wird mittels lokalen Erhitzens und Abschreckens herbeigeführt, wobei es nicht zu den geometrischen Verzugsproblemen des Standes der Technik kommt, da die Randschichthärtung nur in verhältnismäßig kleinen Bereichen abschnittsweise durchgeführt wird. Die Randschichthärtung wird bevorzugt nur an der Verzahnung oder an Abschnitten der Verzahnung durchgeführt.

Bevorzugt als vorteilhafte Weiterbildung kann als Bestandteil des Schrittes d) ein Schritt d1) derart erfolgen, dass nach dem Abkühlen und vor dem Schritt e) ein Anlassen bei einer Temperatur von 550°C bis 650°C durchgeführt wird. Dieses Anlassen verbessert die Eigenschaften des nicht aufgekohlten Bereiches bedarfsgerecht positiv.

Ein Stahl, der aufgrund seiner chemischen Zusammensetzung geeignet ist, als Lufthärter für den Rohling verwendet zu werden, ist beispielsweise ein Stahl, der enthält:
0,15 - 0,25Gew.-% Kohlenstoff,
0,1 - 0,5Gew.-% Silizium,
0,1 - 0,5Gew.-% Mangan,
1 - 0,5Gew.-% Chrom,
0,1 - 0,4Gew.-% Molybdän,
3,5 - 4,5Gew.-% Nickel.

Eine vorteilhafte Weiterbildung der Erfindung sieht vor, dass mittels des Aufkohlens der Randkohlenstoffgehalt des Zahnrades in den aufgekohlten Teilabschnitten zwischen 0,7 Gew.-% bis 1,0 Gew.-% liegt.

In dem Schritt der lokalen weiteren Wärmebehandlung im Rahmen des Randschichthärtens, bei dem erneut die Randschicht in dem aufgekohlten Teilbereich austenitisiert und abgeschreckt wird, wird einerseits die gewünschte Härte in diesen Teilbereichen erwirkt und andererseits entstehen nur noch örtliche Verzüge, die die Zahnräder im Ganzen nicht verformen. Die lokale Erwärmung wird bevorzugt durch Flammen oder induktiv oder mittels Laserstrahls oder mittels eines Elektronenstahls vollzogen. Das Abschrecken erfolgt besonders bevorzugt mittels einer Flüssigkeit, so dass die für diese Art des Härtens erforderliche Abkühlgeschwindigkeit gewährleistet ist.

Der weitere Prozess sieht vor, dass ein Anlassen und die mechanische Fertigbearbeitung - wie im herkömmlichen Verfahren - stattfinden. Infolge der geringeren Verzüge kann das Fertigbearbeiten auch weniger aufwändig erfolgen, weil schon vorab die geringeren Verzüge mit einem kleiner dimensionierten Aufmaß berücksichtigt werden können, so dass das mechanisch abzuarbeitende Volumen geringer ist.

Das nach der Erfindung hergestellte erfindungsgemäße Zahnrad besteht somit aus einem lufthärtenden Stahl, der in einigen Teilbereichen einsatzgehärtet ist. Das Zahnrad weist in den einsatzgehärteten Teilbereichen bevorzugt einen Kohlenstoffgehalt zwischen 0,7 Gew.-% bis 1,0 Gew.-% auf. Dieser Kohlenstoffgehalt ist mittels des bereits beschriebenen Aufkohlens bzw. Carburierens erwirkt worden. Besonders bevorzugt befinden sich die einsatzgehärteten Teilbereiche im Bereich der Verzahnung oder umfassen die Verzahnung.

Das bevorzugte Anwendungsgebiet der Erfindung liegt bei Zahnrädern bzw. Getrieben mit derartigen Zahnrädern, die einen Durchmesser von mindestens 0,5m - bevorzugt mindestens 0,7m - besonders bevorzugt mindestens 1,0m aufweisen. Bei derartigen Abmessungen fallen die Verzüge im Rahmen des herkömmlichen Verfahrens beim Vergüten des Zahnrades zunehmend besonders ins Gewicht.

Im Folgenden ist die Erfindung anhand eines speziellen Ausführungsbeispiels unter Bezugnahme auf eine Zeichnung näher beschrieben. Es zeigt:

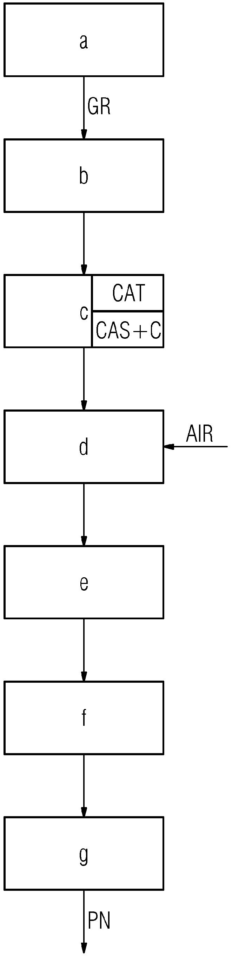

Figur 1 einen schematischen Ablauf des erfindungsgemäßen Verfahrens.

Figur 1 zeigt ein Ablaufdiagramm des erfindungsgemäßen Verfahrens zum Herstellen eines Zahnrades PN.

Im Schritt a) erfolgt die Bereitstellung eines Rohlings GR aus Stahl. Der Stahl, der als Lufthärter ausgewählt wurde, umfasst die Legierungsbestandteile:
0,15 - 0,25 Gew.-% Kohlenstoff,
0,1 - 0,5 Gew.-% Silizium,
0,1 - 0,5 Gew.-% Mangan,
1 - 0,5 Gew.-% Chrom,
0,1 - 0,4 Gew.-% Molybdän,
3,5 - 4,5 Gew.-% Nickel.

Im Schritt b) findet eine mechanische Vorbearbeitung mit Aufmaß des Zahnrades PN bzw. des Rohlings GR statt.

Im anschließenden Schritt c) erfolgt ein Aufkohlen zumindest an Teilabschnitten CAS des Zahnrades PN, wobei das gesamte Zahnrad PN einer Aufkohlungstemperatur CAT ausgesetzt wird, wobei die aufzukohlenden Teilabschnitte CAS mit Kohlenstoff C angereichert werden. Die Aufkohlungstemperatur (CAT) beträgt zwischen 850°C bis 930°C.

Im anschließenden Schritt d) wird das Zahnrad PN an Luft AIR abgelegt, so dass ein verhältnismäßig langsames Abkühlen des lufthärtenden Stahles des Rohlings GR stattfindet. Die aufgekohlten Teilbereiche CAS bleiben hierbei weitestgehend verhältnismäßig weich, wobei der Randkohlenstoffgehalt (Kohlenstoff C) nach dem Aufkohlen zwischen 0,7 Gew.-% bis 1,0 Gew.-% liegt.

Bevorzugt kann als Bestandteil des Schrittes d) ein Schritt d1) derart erfolgen, dass nach dem Abkühlen und vor dem Schritt e) ein Anlassen bei einer Temperatur von 550°C bis 650°C durchgeführt wird. Dieses Anlassen verbessert die Eigenschaften des nicht aufgekohlten Bereiches bedarfsgerecht positiv.

In dem anschließenden Verfahrensschritt e) findet ein Randschichthärten des aufgekohlten Teilbereichs CAS statt. Hierbei wird die Verzahnung - das ist hier der aufgekohlte Teilbereich CAS - bis in einer geeigneten Materialtiefe durch ein geeignetes Verfahren, zum Beispiel durch Flammen oder induktiv, bis über die dortige Austenitisierungstemperatur erwärmt und rasch mit einer Flüssigkeit (bevorzugt Öl, Polymer oder Wasser) abgeschreckt. Die Austenitisierungstemperatur beträgt bevorzugt zwischen 750°C bis 850°C. Die dabei entstehenden Verzüge sind nur örtlich und verformen die Zahnräder PN im Ganzen nicht.

Im darauf folgenden Schritt f) findet ein Anlassen statt, so dass die gewünschten Härten und Zähigkeiten in dem Grundwerkstoff und den randschichtgehärteten Teilabschnitten CAS erreicht werden.

In dem anschließenden Verfahrensschritt g) wird das Zahnrad PN mechanisch fertig bearbeitet, so dass alle Sollmaße hergestellt sind.

## Patentansprüche

1. Verfahren zum Herstellen eines Zahnrades PN umfassend die folgenden Schritte:
a) Bereitstellen eines Rohlings (GR) aus Stahl,
b) Mechanische Vorbearbeitung mit Aufmaß,
c) Aufkohlen zumindest an Teilabschnitten (CAS) des Zahnrades (PN), wobei das gesamte Zahnrad (PN) einer Aufkohlungstemperatur (CAT) ausgesetzt wird und die aufzukohlenden Teilabschnitte (CAS) mit Kohlenstoff (C) angereichert werden,
**gekennzeichnet dadurch, dass** die weiteren Schritte umfasst sind:
d) Abkühlen des Zahnrades (PN) in einer Gasatmosphäre,
e) Randschichthärten der aufgekohlten Teilabschnitte (CAS),
f) Anlassen,
g) mechanische Fertigbearbeitung.

2. Verfahren nach Anspruch 1,
wobei der Stahl des Rohlings (GR) ein Lufthärter ist.

3. Verfahren nach Anspruch 2,
wobei der Stahl des Rohlings (GR) die folgenden Legierungsbestandteile umfasst:
0,15 - 0,25Gew.-% Kohlenstoff,
0,1 - 0,5Gew.-% Silizium,
0,1 - 0,5Gew.-% Mangan,
1 - 0,5Gew.-% Chrom,
0,1 - 0,4Gew.-% Molybdän,
3,5 - 4,5Gew.-% Nickel.

4. Verfahren nach Anspruch 1,
wobei mittels des Aufkohlens der Randkohlenstoffgehalt des Zahnrades (PN) in den aufgekohlten Teilabschnitten (CAS) zwischen 0,7Gew.-% - 1Gew.-% liegt.

5. Verfahren nach Anspruch 1,
wobei das Randschichthärten mittels lokaler Erwärmung über die Austenitisierungstemperatur und anschließendes Abkühlen erfolgt.

6. Verfahren nach Anspruch 5,
wobei das Erwärmen induktiv oder mittels Flammen oder mittels Laserstrahls oder mittels Elektronenstrahls erfolgt.

7. Verfahren nach Anspruch 5 oder 6,
wobei das Randschichthärten ein Abkühlen als Abschrecken mittels einer Flüssigkeit umfasst.

8. Verfahren nach einem der vorhergehenden Ansprüche 1 bis 7,
wobei zwischen den Schritten d) und e) ein Schritt d1) erfolgt, derart, dass ein Anlassen bei einer Temperatur von 550°C bis 650°C durchgeführt wird.

9. Zahnrad hergestellt nach einem Verfahren gemäß mindestens einem der vorhergehenden Ansprüche 1 bis 8, wobei das Zahnrad aus einem lufthärtenden Stahl besteht, der in einigen Teilbereichen (CAS) einsatzgehärtet ist.

10. Zahnrad nach Anspruch 9,
wobei der Durchmesser des Zahnrades größer als 0,5m, bevorzugt größer als 1m ist.

11. Getriebeverdichter mit einem Getriebe umfassend ein Zahnrad gemäß Anspruch 8, 9 oder 10.
